# EUROPEAN PATENT APPLICATION

(11) **EP 3 229 398 A1**
(43) Date of publication of application: **11.10.2017**
(21) Application number: 16305413.3
(22) Date of filing: 08.04.2016
(51) Int. Cl.: H04L 9/08

(54) **A METHOD FOR UPDATING A LONG-TERM KEY USED TO PROTECT COMMUNICATIONS BETWEEN A NETWORK AND A REMOTE DEVICE**

(71) Applicant: GEMALTO SA, 92190 Meudon (FR)
(72) Inventor: PHAN, Ly Thanh, 92190 Meudon (FR)
(74) Representative: Delaval, Guillaume Laurent

(57) **Abstract**

The invention relates to a method for updating a first long-term key (LTK0) used to protect communications between a telecommunication network (100) and a remote device (130) associated to a secure element (101), said secure element (101) storing the first long-term key (LTK0) and a public key belonging to an over-the-air key pair which is adapted to secure data exchange between the remote device (130) and an over-the-air server (104) configured for the remote maintenance of the secure element (101), said over-the-air server (104) storing said over-the-air key pair which is composed of said public key and of a corresponding private key. The method comprises the steps of: generating (200) a second long-term key (LTK1), ciphering (201) the second long-term key (LTK1) using the public key of the over-the-air key pair, sending (202) the ciphered version of the second long-term key (LTK1) to the over-the-air server (104), replacing (203) in the secure element (101) the first long-term key (LTK0) by the second long-term key (LTK1).

## Description

### TECHNICAL FIELD

The present invention relates to a method for updating a long-term key used to protect communications between a telecommunication network and a remote device, and more particularly to technical field of securing communications in a mobile telecommunication network.

### BACKGROUND OF THE INVENTION

In a Pre-Shared Key based system, the pre-shared shared secrets also called long-term keys (LTK) are used for authentication, confidentiality and integrity protection. In particular in modern cellular telecommunication system the long term key, which is often designated as Kᵢ, is set at personalization phase of a secure element such as a UICC (Universal International Circuit Card) and is used in the authentication process of the SIM (Subscriber Identity Module) or USIM (Universal Subscriber Identity Module) as well as during the derivation process to obtain the radio encryption keys used to secure communications between the mobile device of a subscriber and a telecommunication network.

The device is typically a smartphone, a PDA, a tablet, a mobile phone or a machine-to-machine module which can be for example embedded in a car.

The secure element is for example a UICC (Universal Integrated Circuit Card). It can be in the format of a smart card, of a packaged chip, or any other format. It can be used in mobile terminals in GSM and UMTS networks for instance. The UICC ensures network authentication, integrity and security of all kinds of personal data.

The UICC mainly contains a SIM application for GSM/GPRS networks and in a USIM application for UMTS network it is the USIM application. For networks supporting Long-Term Evolution (LTE), the UICC contains an ISIM application. A UICC may also contain several other applications, making it possible for the same smart card to give access to UMTS and LTE networks, and also allows storage of a phone book as well as other types of services.

A UICC can normally be removed from a mobile terminal, for example when the user wants to change his mobile terminal. After having inserted his UICC in his new terminal, the user will still have access to his applications, contacts and credentials (network operator).

The secure element can also be of eUICC type (embedded UICC). eUICCs are UICCs that are either soldered either not totally linked to devices but that are removable with difficulty because they are not intended to be removed, located in terminals that are distant or deeply integrated in machines. A special form factor of the UICC (very small for example and therefore not easy to handle) can also be a reason to consider it is in fact integrated in a terminal.

In this description, we will refer in general to a secure elements of UICC type. However, the skilled person will understand that the invention is applicable for secure element of various types such as UICCs, eUICCs, embedded secure elements (soldered to a motherboard of the device or integrated in a System-on-Chip), secure memory cards or micro SD cards. These secure elements can be administrated by operators or third parties using an over-the-air server (OTA). The invention is also applicable to technologies that are implementing the functionalities of secure element by software.

When the long-term keys are compromised, it is not possible to perform an update of such key once the UICC is released on the field.

The long-term key is used for confidentiality protection so that generating a new long-term key inside the secure element or inside the communication device that is associated with the secure element and then send it securely based on pre-shared keys to a central authentication server such as the Home Subscriber Server (HSS) of the 3GPP LTE network or the AuC of the 3GPP UMTS network is not possible.

Another issue is related to the synchronization between the secure element and the central authentication server for the newly generated long-term key to be used at the same time by both parties.

### SUMMARY OF THE INVENTION

The invention related to a method for updating a first long-term key used to protect communications between a telecommunication network and a remote device associated to a secure element, said secure element storing the first long-term key and a public key belonging to an over-the-air key pair which is adapted to secure data exchange between the remote device and an over-the-air server configured for the remote maintenance of the secure element, said over-the-air server storing said over-the-air key pair which is composed of said public key and of a corresponding private key. The method comprises the steps of:
- generating by the secure element a second long-term key;
- ciphering the second long-term key using the public key of the over-the-air key pair;
- sending the ciphered version of the second long-term key to the over-the-air server for it to be deciphered using the private key of the over-the-air key pair and then to update the telecommunication network with the second long-term key;
- replacing in the secure element the first long-term key by the second long-term key.

As an example, the first long-term key is replaced by the second long-term key once an acknowledgment message is received from the over-the-air server indicating that the second-long term key has been taken into account by the telecommunications for securing further data exchanges between the telecommunication network and the remote device.

According to one embodiment, an identifier of the subscriber, such as an IMSI, is transmitted enciphered using the second long-term key together with the second long-term key.

The invention also relates to a secure element that is configured to be associated with a remote device and to implement the aforementioned method.

The invention also relates to an over-the-air server adapted for the remote maintenance of at least one secure element of a subscriber. The server stores a public key belonging to an over-the air key pair composed of said public key and an associated private key, the server being adapted for updating a first long-term key stored by a telecommunication network, said first long-term key being adapted to secure communications between said telecommunication network and a remote device associated to the at least one secure element. The over-the-air server being is configured to:
- receive a second long-term key generated by the secure element in a message ciphered by using the public key of the over-the-air key pair;
- decipher said message to recover the second long-term key by using the private key of the over-the-air key pair;
- send an update message to a subscription database of the telecommunication network in order to replace the first long-term key associated to the subscriber by the second long-term key.

According to an example, the over-the-air server is configured to send a request message to the remote device associated to the secure element for requesting the generation of a new long-term key by the secure element.

As an example, the request message is carried by a BIP channel.

According to one aspect of the invention, the over-the-air server is adapted to receive an acknowledgement message from the subscription database indicating that the update was correctly performed by the telecommunication network.

According to another example, the over-the-air server is adapted to send an acknowledgement message to the remote device associated with the secure element indicating that the update was correctly performed by the telecommunication network.

The over-the-air server can be for example adapted to send to the remote device together with the acknowledgement message a new subscription information, such as a new IMSI.

The over-the-air server can be for example adapted to encipher the acknowledgment message before sending it to the remote device associated with the secure element using the second long-term key.

### BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:
- Figure 1 represents a telecommunication system implementing a mechanism to update securely a long-term key used for securing exchanges between a remote device and a network;
- Figure 2 is a simplified representation of a method for generating and transmitting securely a new long-term key to be used in a telecommunication system for replacing a potentially corrupted long-term key;
- Figure 3 is a diagram providing an example of message exchanges between a remote device, an OTA server and a central authentication server.

### DETAILED DESCRIPTION

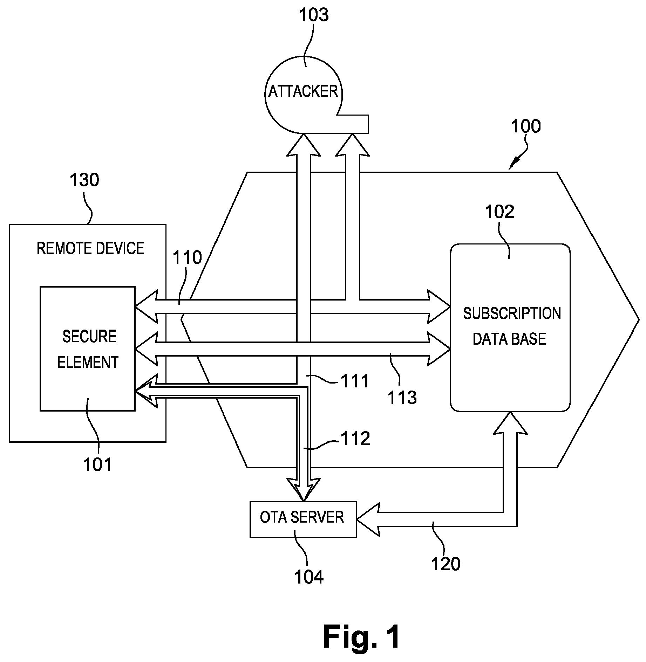

Figure 1 represents a telecommunication system implementing a mechanism to update securely a long-term key used for securing exchanges between a remote device and a network.

In this example, a remote device 130 is associated to a secure element 101, for example of UICC type. The remote device is configured to communicate through a telecommunication network 100. To do so, the UICC contains one or several long-term keys (LTK) attributed to a given subscriber by the mobile network operator (MNO) for authentication, integrity and encryption.

The telecommunication system also comprises subscriber data base, comprised for example in a Home Subscription Sever 102, designated in this description using the acronym HSS.

The HSS includes the functions of a Home Location Register (HLR) and of an Authentication Center (AuC). The HSS contains security information, in particular the aforementioned long-term keys (LTK) attributed to the subscribers by the Mobile Network Operator (MNO).

The telecommunication system also includes an over-the-air (OTA) server 104. The OTA server can be used for administrating UICCs that are already deployed on the field. It can be used for example to upload new applications or portion of software for correcting bugs remotely.

The administration of a secure element 101 by the OTA server 104 can be implemented only if the communications between these two entities of the system are secure. For that purpose, an OTA server public key is provisioned in the secure element 101, and the corresponding key pair comprising the said public key and a corresponding private key is provisioned in the OTA server 104. This key pair is designated in this description as the over-the-air key pair or OTA key pair, and can be used for example to implement certificate-based encryption.

The long-term key LTK0 that is provisioned into a given secure element 101 is used to implement securely communications channels 110, 111 between the remote device 130 and the network 100 as well as between the secure element 101 and the OTA server 104.

In this example, the OTA server 104 is represented outside of the telecommunication network 100 that is handled by the subscriber's MNO, as it can be operated by a third party. However, in some alternative examples, the OTA server 104 can be considered inside the telecommunication network 100, in particular if it the server 104 is operated by the MNO himself.

The long-term key LTK0 is a secret that is shared between the UICC 101 and the MNO and can be used directly or to derivate another key used for symmetric encryption. On the MNO side, LTK0 is stored in a subscription database such as an HSS 102.

If a third party 103, called attacker, succeeds to get this shared secret, he will then be able to listen the communication on channels 110 and 111.

A secure mechanism is proposed to update the long-term key LTK0 that is used by the remote device 130 and the network 100 to secure their communications by replacing it by a newly generated long-term key LTK1.

For that purpose, the secure element 101, which is for example of UICC type, is responsible of generating a new long-term key LTK1. LTK1 is then transmitted securely to the OTA server using a secure communication channel 112 implemented thanks to the OTA key pair. If an attacker 103 possesses LTK0, he will not be able to listen data exchanged on channel 112 without getting the private key if the OTA key pair.

Additionally, the data link 120 between the OTA server and the HSS server is secured relatively to the attacker 103 as it is outside of the compromised telecom network. This means that the network can be updated securely by replacing LTK0 by LTK1 for this subscriber. Once this is done, a secure data channel 113 can be set up for the remote device 130 and the network 100 based on the use of LTK1. Attacker 103 will not be able to catch data exchanged on this channel 113 as he may know LTK0 but not LTK1.

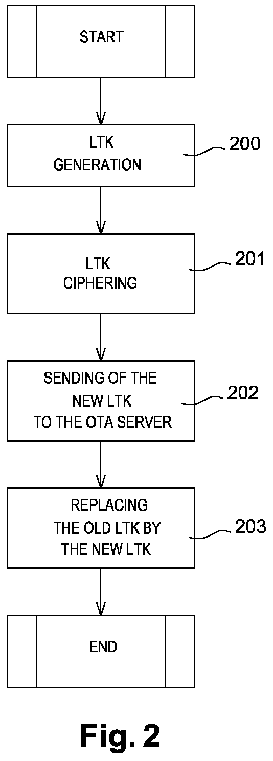

Figure 2 is a simplified representation of a method for generating and transmitting securely a new long-term key to be used in a telecommunication system for replacing a potentially corrupted long-term key.

As a first step 200, a secure element associated to a remote device generates a new long-term key LTK1 in order to replace the long-term key LTK0 that is currently in use. This can be done for example using well known techniques, for example by using a Cryptographically Secure Pseudo Random Generator based on a hardware noise, and a hash function e.g. HASH-256. As an alternative to said hash function, an Advance Encryption Standard function (AES) already present in the UICC can be used. The hardware noise can be farmed over a period of time as random series of bits, then is hashed via the hash function several times. It is also possible to use one set of the bits generated by the hardware noise as the message, and another set of the bits generated by the hardware noise as the key for the AES function. The hardware noise generated message is then ciphered multiple of times, the result of the ciphering becoming the input for the next stage. The result can be considered cryptographically secure and unpredictable. Elliptic curve cryptography may also be used as a pseudo-random generator.

Then, the newly generated long-term key LTK1 is ciphered 201 by the secure element using the public key of the OTA key pair. For example, RSA public key encryption or elliptic curve encryption can be used for that purpose.

After that, the ciphered version of the newly generated long-term key LTK1 is sent 202 to the OTA server.

Once the OTA server receives this ciphered message, the newly generated long-term key is deciphered using the private key of the OTA key pair. Then, the newly generated long-term key LTK1 is send by the OTA server to the network, for example to a subscription database such as a Home Subscription Server (HSS) in order to associate the second newly generated key pair (LTK1) with the user's subscription.

In another step 203, the secure element replace the old and compromised long-term key LTK0 by the newly generated one LTK1.

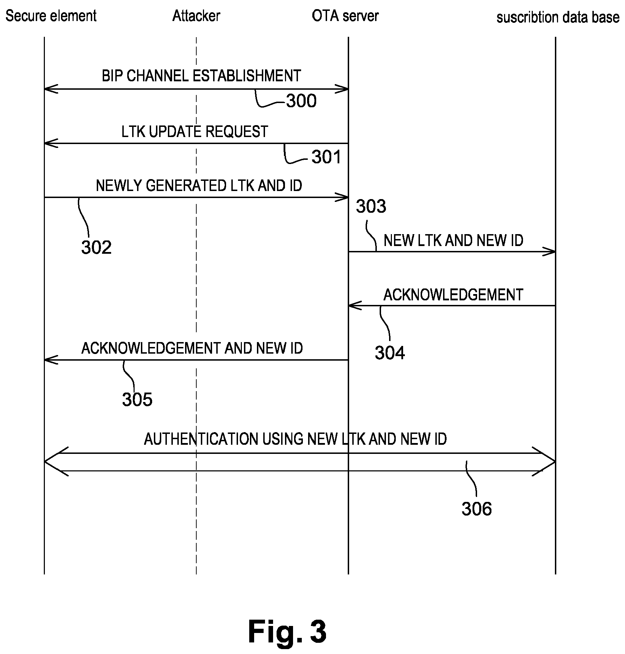

Figure 3 is a diagram providing an example of message exchanges between a remote device, an OTA server and a central authentication server.

A first set of messages 300 is exchanged between the remote device comprising a secure element and the OTA server in order to open a BIP channel (Bearer Independent Protocol) between these two entities. The secure element is for example of UICC type.

Then, because the mobile network operator (MNO) estimates that the long-term key LTK0 currently in use for this subscriber may be compromised, the OTA server requests 301 a key update.

After receiving this request the remote device forwards it to the secure element to which it is associated and said secure element generates a new long-term key LTK1. The secure element then ciphers LTK1 with the public key of the OTA key pair. Then, the remote device forwards it securely 302 to the OTA server.

In addition to the newly generated long-term key, data such as a subscription identifier can also be transmitted enciphered using the newly generated long-term key LTK1. This subscription identifier is for example a new IMSI (International Mobile Subscriber Identity) allocated by the mobile network operator to the subscriber that is using the remote device or a Temporary IMSI (Temporary Mobile Subscriber Identity). This subscription identifier can be used for example for synchronization purpose between the secure element and the subscription database.

The OTA server can then decipher the newly generated long-term key LTK1 by using the private key of the OTA key pair. Once LTK1 key is known by the OTA server, it can be used to decipher other messages sent by the remote device such as the subscription identifier.

The OTA server is able to communicate securely with other entities of the network such as the HSS server. The data link between the OTA server and the HSS server is secured relatively to the attacker as it is outside of the compromised part of the telecommunication network.

According to one aspect of the invention, the OTA server can then generate a new subscription identifier, for example a new IMSI or a new TMSI noted respectively IMS11 and TMS11.

The newly generated long-term key LTK1 and the new subscription identifier can then be transmitted 303 by the OTA server to the subscription database for the network to be updated.

The subscription database is updated with the new subscription information composed in this example of the newly generated long-term key LTK1 and the new subscription identifier generated by the OTA server.

The subscription database then provides an acknowledgement message 304 to the OTA server.

The OTA server can then provide the remote device with an acknowledgement message 305 indicating that the update was correctly performed by the network, meaning that the newly generated long term key LTK1 has been taken into account correctly by the network.

For the remote device and the network to be able of using the new key, it has to be available on both sides and the use of the key needs to be triggered at the same time on the terminal and on the network side. The reception of the acknowledgment message allows to implement the synchronization between the remote device associated to the secure element and the telecommunication network.

According to one embodiment of the invention, the acknowledgement message 305 comprises new subscription information, for example the new subscription identifier. This message is ciphered by LTK1. Advantageously, the attacker is not anymore capable of getting this data in clear as LTK1 is new and not compromised.

The remote device then decipher the received message using LTK1 and gets the new subscription information. At the time of receiving the acknowledgment message, the remote device knows that the newly generated long-term key LTK1 has been taken into account by the network. Therefore, this time can be considered as the starting point for replacing LTK0 by LTK1 for securing data exchanges between the remote device and the network.

In one embodiment, once the acknowledgment message is received by the remote device, an authentication procedure 306 is launched using the new subscription identifier and the new long term key. Once the subscriber is correctly authenticated, a secure channel 120 between the remote device and the network can be set up for sending and receiving data. The secure channel is ciphered based on the use of the newly generated key LTK1, for example using EEA algorithm (EPS Encryption Algorithm).

The skilled person will appreciate that the OTA public key used for securing the exchanged between the OTA server and the remote device can be associated to a digital certificate certifying the ownership of said public key.

Advantageously, the proposed solution can reuse already existing security mechanism such as OTA server security mechanisms, encryption and authentication algorithms while allowing to improve the security of the overall telecommunication system.

The proposed solution allows the renewal of compromised long-term keys. It can also include a mechanism to synchronise the use of keys between the network and the devices deployed on the field. Further, it avoids using additional user certificate/private key mechanism which are generally considered as difficult to implement for a large number of remote devices.

## Claims

1. A method for updating a first long-term key (LTK0) used to protect communications between a telecommunication network (100) and a remote device (130) associated to a secure element (101), said secure element (101) storing the first long-term key (LTK0) and a public key belonging to an over-the-air key pair which is adapted to secure data exchange between the remote device (130) and an over-the-air server (104) configured for the remote maintenance of the secure element (101), said over-the-air server (104) storing said over-the-air key pair which is composed of said public key and of a corresponding private key, the method comprising the steps of:
- generating (200) by the secure element a second long-term key (LTK1);
- ciphering (201) the second long-term key (LTK1) using the public key of the over-the-air key pair;
- sending (202) the ciphered version of the second long-term key (LTK1) to the over-the-air server (104) for it to be deciphered using the private key of the over-the-air key pair and then to update the telecommunication network with the second long-term key (LTK1);
- replacing (203) in the secure element (101) the first long-term key (LTK0) by the second long-term key (LTK1).

2. A method according to claim 1, wherein the first long-term key (LTK0) is replaced (203) by the second long-term key (LTK1) once an acknowledgment message (305) is received from the over-the-air server (104) indicating that the second-long term key (LTK1) has been taken into account by the telecommunications for securing further data exchanges between the telecommunication network (100) and the remote device (130).

3. A method according to any of the preceding claims, wherein an identifier of the subscriber, such as an IMSI, is transmitted enciphered using the second long-term key (LTK1) together with the second long-term key (LTK1).

4. A secure element (101) configured to be associated with a remote device (130) and to implement any of the preceding claims.

5. An over-the-air server (104) adapted for the remote maintenance of at least one secure element (101) of a subscriber, the server storing a public key belonging to an over-the air key pair composed of said public key and an associated private key, the server being adapted for updating a first long-term key (LTK0) stored by a telecommunication network (100), said first long-term key (LTK0) being adapted to secure communications between said telecommunication network (100) and a remote device (130) associated to the at least one secure element (101), the over-the-air server being further configured to:
- receive a second long-term key (LTK1) generated by the secure element (101) in a message ciphered by using the public key of the over-the-air key pair;
- decipher said message to recover the second long-term key (LTK1) by using the private key of the over-the-air key pair;
- send an update message to a subscription database (102) of the telecommunication network (100) in order to replace the first long-term key (LTK0) associated to the subscriber by the second long-term key (LTK1).

6. An over-the-air server (104) according to claim 5 configured to send a request message (301) to the remote device (130) associated to the secure element (101) for requesting the generation of a new long-term key by the secure element (101).

7. An over-the-air server (104) according to claim 6, wherein the request message (301) is carried by a BIP channel.

8. An over-the-air server (104) according to any of claims 5 to 7 adapted to receive an acknowledgement message (304) from the subscription database (102) indicating that the update was correctly performed by the telecommunication network (100).

9. An over-the-air server (104) according to claim 8 adapted to send an acknowledgement message (305) to the remote device (130) associated with the secure element (101) indicating that the update was correctly performed by the telecommunication network (100).

10. An over-the-air server (104) according to claim 9 adapted to send to the remote device (130) together with the acknowledgement message (305) a new subscription information, such as a new IMSI.

11. An over-the-air server (104) according to any of claims 9 or 10, adapted to encipher the acknowledgment message (305) before sending it to the remote device (130) associated with the secure element (101) using the second long-term key (LTK1).
